# EUROPEAN PATENT APPLICATION

(11) **EP 3 467 559 A1**
(43) Date of publication of application: **10.04.2019**
(21) Application number: 18197507.9
(22) Date of filing: 28.09.2018
(51) Int. Cl.: G02B 6/38

(54) **OPTICAL CONNECTOR AND OPTICAL CONNECTION STRUCTURE**

(30) Priority: 04.10.2017 JP 2017194525
(71) Applicant: Sumitomo Electric Industries, Ltd., Osaka-shi, Osaka 541-0041 (JP)
(72) Inventor: Morishima, Tetsu, Osaka (JP); Nakanishi, Tetsuya, Osaka (JP)
(74) Representative: Hoffmann Eitle

(57) **Abstract**

An optical connector includes an optical fiber, a ferrule holding the optical fiber, and a plug frame accommodating the ferrule. The optical fiber includes a glass fiber and a resin coating surrounding the glass fiber. The ferrule has a through-hole inside the ferrule and a flange outside the ferrule. The flange has a quadrangular cross-section perpendicular to the through-hole. The ferrule holds the glass fiber in the through-hole. The plug frame has a quadrangular tubular cross-section perpendicular to the through-hole. In one aspect, the flange has first and second faces opposing each other with the through-hole there between and third and fourth faces opposing each other with the through-hole there between and orthogonal to the first and second faces. The plug frame has two alignment parts capable of supporting the first and second faces, and there are clearances between the plug frame and the third and fourth faces.

## Description

### BACKGROUND OF THE INVENTION

### Field of the Invention

The present invention relates to optical connectors and optical connection structures, and specifically to an optical connector and an optical connection structure that include a ferrule with a flange and a plug frame accommodating the ferrule.

### Description of the Related Art

With the widespread use of information and communication technologies such as the Internet, the construction of optical networks is progressing to support high-speed communication and increased volumes of information as well as two-way communication and high-volume communication. Optical connectors are used to connect network devices to each other in data centers and to connect optical fibers to premises receiving equipment in subscriber optical communication systems.

An optical connector includes a ferrule holding an optical fiber and a plug frame accommodating the ferrule. A flange is disposed outside the ferrule. The flange is biased in the optical axis direction of the optical fiber. For example, the optical connector is coupled to another optical connector with a sleeve there between, and the cores of the optical fibers are optically connected together to form an optical connection structure.

Optical connection structures need to maintain an optical connection between cores when an external force is applied to a plug frame. Accordingly, International Publication No. 2014/148253 discloses a structure for preventing the rotation of a ferrule by pressing a flange having a substantially quadrangular cross-section with leaf springs in four directions, namely, upward, downward, leftward, and rightward. International Publication No. 2014/148253 discloses only the structure for preventing the rotation of the ferrule; it does not disclose that the flange is allowed to float so that no force is applied thereto.

### SUMMARY OF THE INVENTION

An object of the present invention is to provide an optical connector and an optical connection structure that require fewer components and that have a simpler structure.

To achieve the object, there is provided an optical connector including an optical fiber, a ferrule holding the optical fiber, and a plug frame accommodating the ferrule. The optical fiber includes a glass fiber and a resin coating surrounding the glass fiber. The ferrule has a through-hole inside the ferrule and a flange outside the ferrule. The flange has a quadrangular cross-section perpendicular to the through-hole. The ferrule holds, in the through-hole, a portion of the glass fiber exposed from the resin coating at an end of the optical fiber. The plug frame has a quadrangular tubular cross-section perpendicular to the through-hole.

In one aspect of the optical connector of the present invention, the flange has first and second faces opposing each other with the through-hole there between and third and fourth faces opposing each other with the through-hole there between and orthogonal to the first and second faces. The plug frame has an alignment part capable of supporting the first and second faces, and there are clearances between the plug frame and the third and fourth faces of the flange.

In another aspect, the plug frame has first and second faces opposing each other with the through-hole there between and third and fourth faces opposing each other with the through-hole there between and disposed in a direction orthogonal to the first and second faces. The flange has an alignment part capable of supporting the first and second faces, and there are clearances between the flange and the third and fourth faces of the plug frame.

The alignment part of the optical connector of the present invention may be wider than the first and second faces. The alignment part may be a leaf spring structure. The optical fiber may be a single-mode fiber, a multicore fiber, a polarization-maintaining fiber, or a fiber bundle. The ferrule may be formed of zirconia.

An optical connection structure according to the present invention includes the optical connector of the present invention and a connection target coupled to the optical connector of the present invention with a sleeve there between. The optical fiber is optically connected to another optical fiber.

The alignment of the ferrule of the optical connector and optical connection structure of the present invention is achieved simply by providing two alignment parts. Thus, the optical connector requires fewer components and has a simpler structure.

### BRIEF DESCRIPTION OF THE DRAWINGS

Figure 1 is an external perspective view of an optical connector according to a first embodiment of the present invention.
Figure 2 is a perspective view of a ferrule included in the optical connector in Fig. 1.
Figure 3 is a partial sectional view showing the optical connector in Fig. 1 before the accommodation of the ferrule into a plug frame.
Figure 4 is a perspective view of a front housing of the optical connector in Fig. 1.
Figure 5A is a sectional view of the front housing as viewed in the direction of the arrows A-A in Fig. 4, and Fig. 5B is a sectional view of the front housing as viewed in the direction of the arrows B-B in Fig. 4.
Figure 6 is a sectional view of the optical connector as viewed in the direction of the arrows VI-VI in Fig. 1.
Figure 7 is a partial sectional view showing the optical connector in Fig. 1 as it opposes another optical connector with a split sleeve there between.
Figures 8A and 8B are sectional views, corresponding to Figs. 5A and 5B, respectively, of the optical connector in Fig. 1 as it is connected to the other optical connector with the split sleeve there between.
Figure 9 is a perspective view of a ferrule according to a second embodiment of the present invention.
Figure 10 is a conceptual diagram illustrating a fiber bundle.

### DESCRIPTION OF THE PREFERRED EMBODIMENTS

Preferred embodiments of optical connectors and optical connection structures according to the present invention will now be described with reference to the attached drawings.

The optical connector disclosed in International Publication No. 2014/148253 always requires four leaf springs, which results in an increased number of components and a complicated structure and thus makes it difficult to reduce the manufacturing cost of the optical connector.

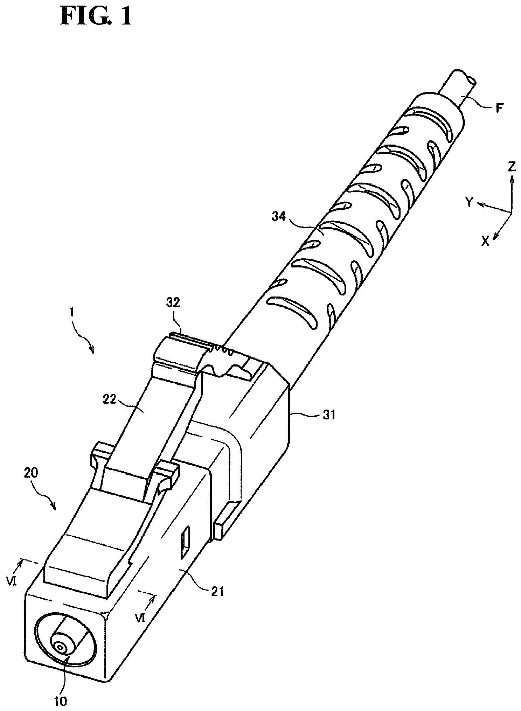

Figure 1 is an external perspective view of an optical connector 1 according to a first embodiment of the present invention. The optical connector 1 includes a plug frame 20 accommodating a ferrule 10. A boot 34 for protecting an optical fiber F is disposed at the rear end of the plug frame 20.

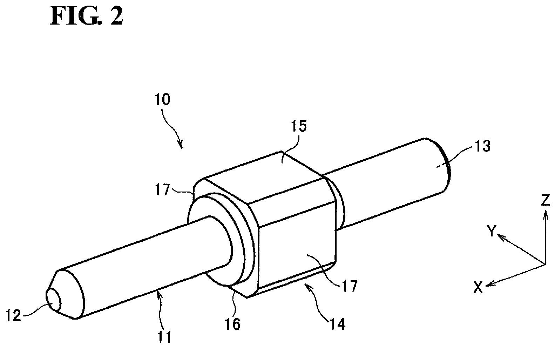

Figure 2 is a perspective view of the ferrule 10 included in the optical connector 1. The ferrule 10 includes a ferrule body 11 extending in the X-axis direction shown in the figure. The ferrule body 11 is formed of, for example, zirconia. The ferrule body 11 is cylindrical and holds therein a portion of a glass fiber exposed from a resin coating at the distal end of an optical fiber F. The optical fiber F is, for example, a multicore fiber having multiple cores. The optical fiber F is attached to the ferrule 10 by inserting the optical fiber F into the rear end 13 of the ferrule body 11 and exposing the distal end face of the optical fiber F at the front end 12 of the ferrule body 11 such that the multiple cores are located at predetermined positions around the central axis of the ferrule 10. The X-axis direction shown in the figure corresponds to the optical axis direction of the optical fiber F.

A flange 14 is disposed at a substantially central position outside the ferrule body 11. The flange 14 has a substantially quadrangular cross-section and has a top surface 15, a bottom surface 16, and side surfaces 17 forming the outer peripheral surface of the flange 14. The top surface 15 and the bottom surface 16 are flat surfaces opposing each other with the optical axis of the optical fiber F there between and parallel to each other at a predetermined distance in the Z-axis direction shown in the figure. The side surfaces 17 are flat surfaces orthogonal to the top surface 15 and the bottom surface 16 and parallel to each other at a predetermined distance in the Y-axis direction shown in the figure. The boundary positions between the top surface 15 and the side surfaces 17 and the boundary positions between the bottom surface 16 and the side surfaces 17 are beveled. The side surfaces 17 of the flange 14 correspond to the first and second faces of the present invention. The top surface 15 corresponds to the third face of the present invention. The bottom surface 16 corresponds to the fourth face of the present invention.

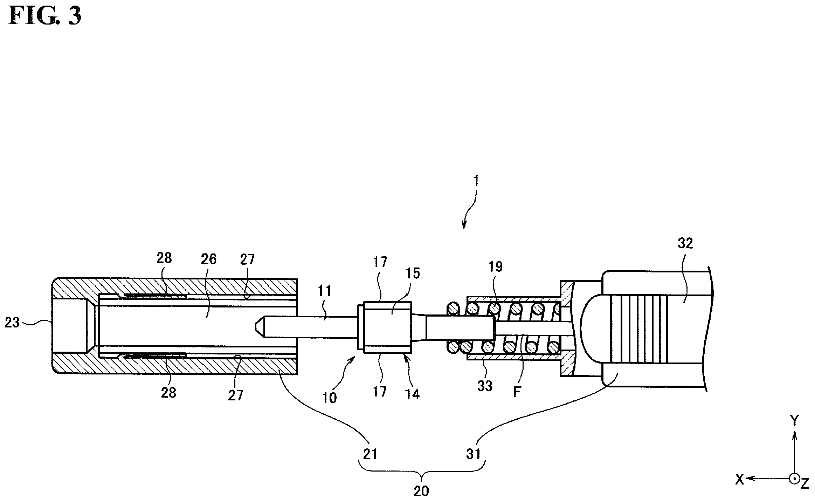

Figure 3 is a partial sectional view showing the optical connector 1 before the accommodation of the ferrule 10 into the plug frame 20. The plug frame 20 has a front housing 21 on the front side thereof (on the side where the ferrule 10 is exposed from the plug frame 20 in the positive direction of the X-axis shown in the figure) and a rear housing 31 on the rear side thereof. The front housing 21 accommodates the distal portion of the ferrule 10, whereas the rear housing 31 accommodates the rear portion of the ferrule 10 and a coil spring 19.

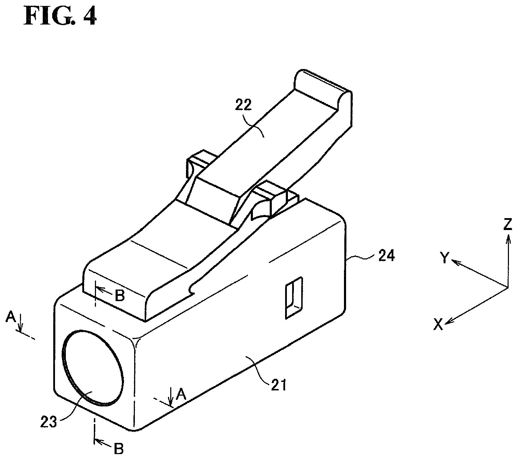

Figure 4 is a perspective view of the front housing 21. The front housing 21 is formed of, for example, resin. The front housing 21 has a rear end opening 24 having a square shape and capable of receiving the ferrule 10 with the flange 14 and a front end opening 23 from which the front end 12 of the ferrule body 11 protrudes. A flexible latch arm 22 is disposed on the outer peripheral surface of the front housing 21.

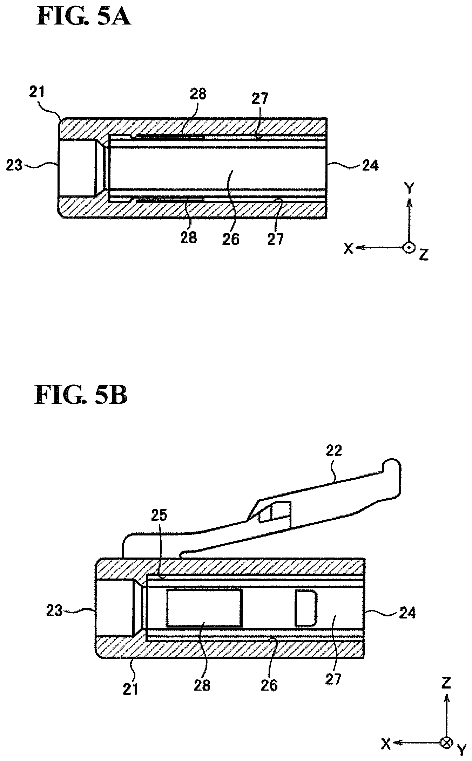

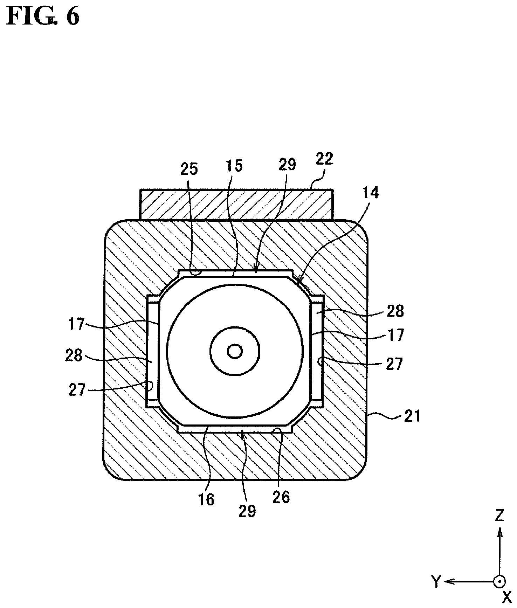

Figure 5A is a sectional view of the front housing 21 as viewed in the direction of the arrows A-A in Fig. 4, and Fig. 5B is a sectional view of the front housing 21 as viewed in the direction of the arrows B-B in Fig. 4. Figure 6 is a sectional view of the optical connector 1 as viewed in the direction of the arrows VI-VI in Fig. 1. The front housing 21 has a substantially quadrangular tubular cross-section and has a top surface 25, a bottom surface 26, and side surfaces 27 inside the front housing 21. The top surface 25 and the bottom surface 26 are parallel to each other at a predetermined distance in the Z-axis direction shown in the figures. The side surfaces 27 are orthogonal to the top surface 25 and the bottom surface 26 and are parallel to each other at a predetermined distance in the Y-axis direction shown in the figures. There are inclined surfaces at the boundary positions between the top surface 25 and the side surfaces 27 and at the boundary positions between the bottom surface 26 and the side surfaces 27.

Alignment parts 28 capable of supporting the flange 14 are disposed on the side surfaces 27 of the front housing 21. The alignment parts 28 are, for example, leaf spring structures capable of pressing the side surfaces 17 of the flange 14 in the Y-axis direction shown in the figures. As shown in Fig. 5A, for example, each alignment part 28 has a curved plate shape with one end attached to one side surface 27 and the other end extending in a free state toward the rear end opening 24.

As shown in Fig. 6, the alignment parts 28 have substantially the same size in the Z-axis direction shown in the figure (hereinafter referred to as "width") as the side surfaces 17 of the flange 14 and are capable of supporting the side surfaces 17. If the alignment parts 28 are provided so that they can press the side surfaces 17 of the flange 14, the flange 14 can be positioned in the center of the front housing 21 in the Y-axis direction and can be prevented from rotating. In addition, if the alignment parts 28 are leaf spring structures, the front housing 21 can be easily manufactured.

If the side surfaces 27 of the front housing 21 are made wider, the alignment parts 28 can be made wider than the side surfaces 17 of the flange 14. In this case, the alignment parts 28 can press the entirety of the side surfaces 17 in the width direction. This reliably prevents the rotation of the flange 14 and thus further stabilizes the position of the ferrule 10. Alternatively, a plurality of alignment parts may be arranged in the Z-axis direction, and the side surfaces 17 may be supported by the plurality of alignment parts.

On the other hand, no alignment part 28 is disposed on the top surface 25 or bottom surface 26 of the front housing 21. There are clearances 29 between the top surface 25 of the front housing 21 and the top surface 15 of the flange 14 and between the bottom surface 26 of the front housing 21 and the bottom surface 16 of the flange 14. The flange 14 is in a floating state in the Z-axis direction.

As shown in Fig. 3, the rear housing 31 is formed of, for example, resin. The rear housing 31 has a cylindrical spring-accommodating part 33 capable of accommodating the rear portion of the ferrule 10 and the coil spring 19. The coil spring 19 is disposed on the rear side of the ferrule 10 and is brought into abutment with the rear end of the flange 14 to bias the ferrule 10 forward. A clip 32 capable of engaging with the latch arm 22 (Figs. 4 and 5B) is disposed on the outer peripheral surface of the rear housing 31.

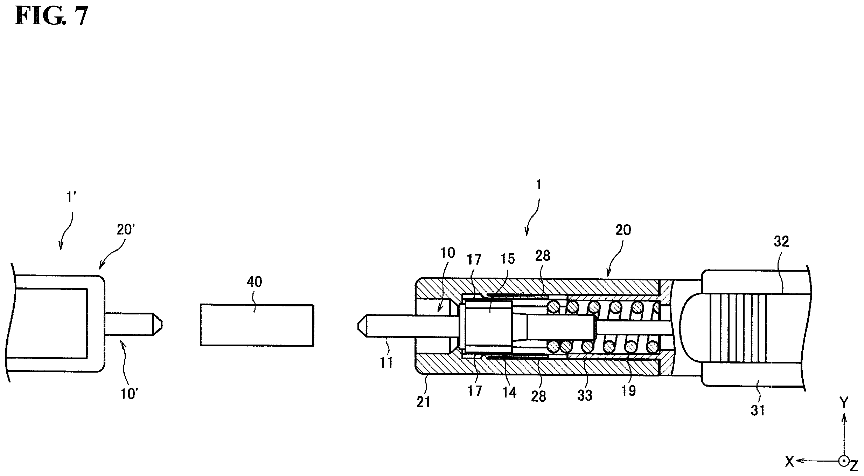

Figure 7 is a partial sectional view showing the optical connector 1 as it opposes another optical connector 1' with a split sleeve 40 there between. As the clip 32 moves onto the latch arm 22, the front housing 21 is latched to the rear housing 31. At the same time, the flange 14 is pushed forward by the biasing force of the coil spring 19. As the flange 14 is moved forward and is inserted into the front housing 21, the distal portion of the ferrule 10 protrudes from the front housing 21. In this case, the side surfaces 17 of the flange 14 are pressed by the alignment parts 28.

In the first embodiment, the plug frame 20 has the alignment parts 28 capable of supporting the first and second faces of the flange 14. This allows the flange 14 to be aligned to the plug frame 20 and also prevents the rotation of the flange 14. In addition, there are the clearances 29 between the plug frame 20 and the third and fourth faces of the flange 14. This prevents the flange 14 from experiencing force from the plug frame 20. Since the ferrule body 11 is formed of zirconia, the ferrule 10 reflects less light at the end face thereof than a metal ferrule.

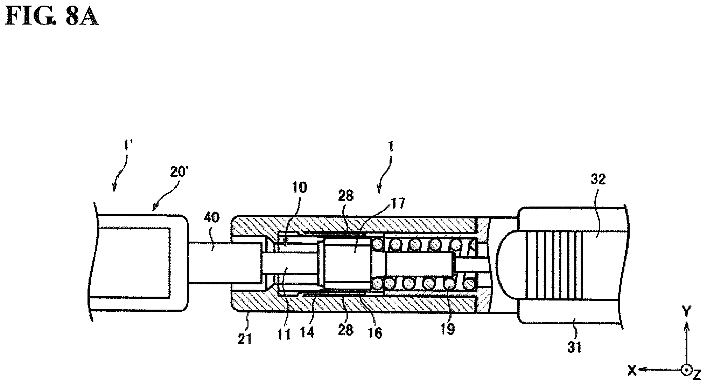

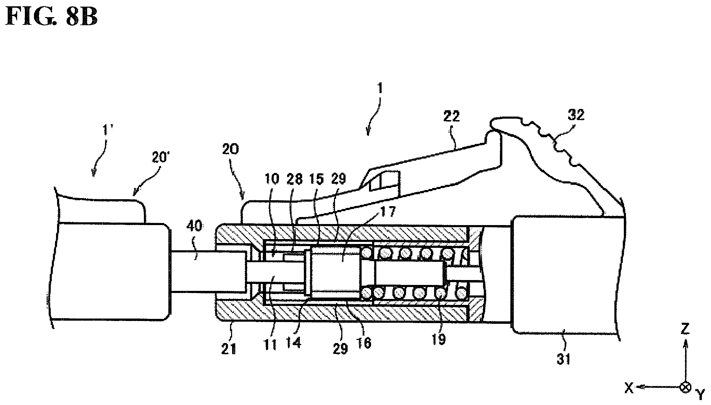

Figures 8A and 8B are sectional views, corresponding to Figs. 5A and 5B, respectively, of an embodiment of an optical connection structure of the present invention in which the optical connector 1 is connected to the other optical connector 1' with the split sleeve 40 there between. The optical connection structure includes the optical connector 1 and the other optical connector 1'. The split sleeve 40 (the sleeve of the present invention) is used to optically connect the optical fiber F on the optical connector 1 side to an optical fiber F' (not shown) on the optical connector 1' side. The optical fiber F' is a multicore fiber having multiple cores. The optical fiber F' is attached to a ferrule 10' such that the multiple cores are located at predetermined positions around the central axis of the ferrule 10'.

Although not shown in cross-section, the optical connector 1' is configured in the same manner as the optical connector 1 and includes a plug frame 20' accommodating the ferrule 10' holding the optical fiber F' and an elastic member that biases the ferrule 10'. The optical connector 1', which corresponds to the connection target of the present invention, may be replaced by an optical plug.

The split sleeve 40 has an inner diameter substantially equal to, or slightly smaller than, the diameter of the ferrules 10 and 10'. The split sleeve 40 has a slit (not shown) that can be widened to increase the inner diameter thereof. The split sleeve 40 may be incorporated into an adaptor (not shown).

The ferrule 10 is inserted into one end of the split sleeve 40, whereas the ferrule 10' is inserted into the other end of the split sleeve 40. The end face of the optical fiber F on the ferrule 10 side and the end face of the optical fiber F' on the ferrule 10' side are brought into surface contact with each other in the split sleeve 40. As the split sleeve 40 enters the front housing 21 and the ferrule 10 is moved rearward, the flange 14 is moved rearward against the biasing force of the coil spring 19, and the side surfaces 17 of the flange 14 are pressed by the alignment parts 28. The ferrule 10 is retained by the biasing force of the elastic member on the optical connector 1' side and the biasing force of the coil spring 19. When an external force is applied to the front housing 21 or the rear housing 31, the force is not transmitted to the ferrule 10, so that the optical connection between the two optical fibers F and F' can be maintained.

More specifically, the flange 14 is pressed by the elastic force of the alignment parts 28 in the Y-axis direction shown in Fig. 8A. Thus, the ferrule 10 can be positioned in the center of the front housing 21 when an external force is applied in the Y-axis direction, so that the optical connection can be maintained. In addition, as shown in Fig. 8B, there are empty spaces formed by the clearances 29 in the Z-axis direction. Thus, the flange 14 experiences no force from the front housing 21 when an external force is applied in the Z-axis direction, so that the optical connection can be maintained. Furthermore, when an external force is applied so as to rotate the ferrule 10, the elastic force of the alignment parts 28 prevents the rotation of the ferrule 10.

In this way, the alignment of the ferrule 10 of the optical connector 1 is achieved simply by providing the two alignment parts 28. Thus, the optical connector 1 requires fewer components and has a simpler structure. The flange 14 is pressed by the alignment parts 28, and there are the clearances 29 in the direction orthogonal to the pressing direction. Thus, the optical connection between the two optical fibers F and F' can be maintained when an external force is applied to the plug frame 20. As a result, an optical connection structure in which an optical connection can be easily maintained with a simple structure can be provided.

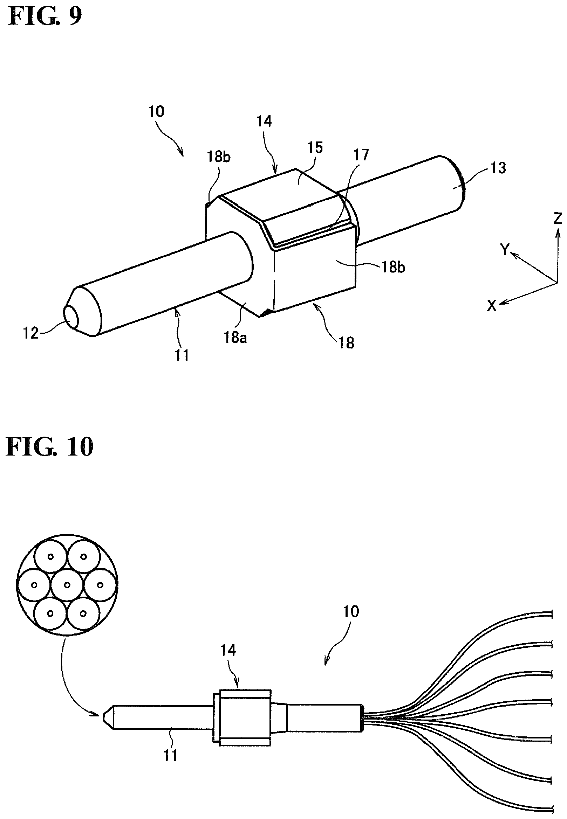

Figure 9 is a perspective view of a ferrule 10 according to a second embodiment of the present invention. Two alignment parts 18 that press the front housing 21 are disposed on the side surfaces 17 of the flange 14. The alignment parts 18 are, for example, a leaf spring structure capable of pressing the side surfaces 27 of the front housing 21 in the Y-axis direction shown in the figure. The alignment parts 18 have a U-shaped cross-section and have a trunk 18a, located in front of the flange 14, through which the ferrule body 11 passes and arms 18b disposed on both sides of the trunk 18a and extending rearward.

The alignment parts 18 (arms 18b) of the flange 14 press the side surfaces 27 of the front housing 21, and there are clearances between the flange 14 and the top surface 25 of the front housing 21 and between the flange 14 and the bottom surface 26 of the front housing 21. In this case, the side surfaces 27 of the front housing 21 correspond to the first and second faces of the present invention. The top surface 25 corresponds to the third face of the present invention. The bottom surface 26 corresponds to the fourth face of the present invention.

In the second embodiment, the flange 14 has the alignment parts 18 capable of supporting the first and second faces of the plug frame 20. This allows the flange 14 to be aligned to the plug frame 20 and also prevents the rotation of the flange 14. In addition, there are the clearances between the flange 14 and the third and fourth faces of the plug frame 20. This prevents the flange 14 from experiencing force from the plug frame 20. In addition, since the alignment parts 18 are a leaf spring structure, the flange 14 can be easily manufactured.

Although LC connectors have been described as examples of optical connectors in the first and second embodiments, the present invention can also be applied to other types of optical connectors, including, for example, SC connectors and MU connectors. Furthermore, although a multicore fiber has been described as an example of the optical fiber F, the optical fiber of the present invention may also be, for example, a single-mode fiber, a polarization-maintaining fiber, or a fiber bundle. Multicore fibers, polarization-maintaining fibers, and fiber bundles are optical fibers that require the adjustment of the angle of rotation about the central axis when optically connected.

Although not shown, a polarization-maintaining fiber (e.g., a stress-induced polarization-maintaining fiber) has circular stress-inducing parts disposed on both sides of a core. Whereas a single-mode fiber has two modes with orthogonal planes of polarization (polarization modes), a polarization-maintaining fiber creates a difference in propagation constant between these two polarization modes to reduce the coupling of one polarization mode to the other polarization mode, thereby achieving an enhanced polarization-maintaining ability.

A fiber bundle is a bundle of single-core fibers for optical connection to a multicore fiber. For example, ends of single-core fibers with a glass diameter of 125 µm are chemically etched to a glass diameter of 45 µm. As shown in Fig. 10, a plurality of (e.g., seven) fibers are inserted together into the ferrule 10 with an adhesive. In this example, the fibers can be arranged such that the core-to-core distance is 45 µm. In this way, it is possible to reliably align not only single-mode fibers, but also multicore fibers, polarization-maintaining fibers, and fiber bundles, thereby achieving a reduction in connection loss.

The embodiments disclosed herein are to be considered in all respects as illustrative and not restrictive. The scope of the invention is indicated by the claims, rather than by the foregoing meaning, and all changes that come within the meaning and range of equivalency of the claims are intended to be embraced therein.

## Claims

1. An optical connector comprising:
an optical fiber comprising a glass fiber and a resin coating surrounding the glass fiber;
a ferrule having a through-hole inside the ferrule and a flange outside the ferrule, the flange having a quadrangular cross-section perpendicular to the through-hole, the ferrule holding, in the through-hole, a portion of the glass fiber exposed from the resin coating at an end of the optical fiber; and
a plug frame accommodating the ferrule and having a quadrangular tubular cross-section perpendicular to the through-hole,
wherein the flange has first and second faces opposing each other with the through-hole there between and third and fourth faces opposing each other with the through-hole there between and orthogonal to the first and second faces, and
wherein the plug frame has two alignment parts capable of supporting the first and second faces, and there are clearances between the plug frame and the third and fourth faces.

2. The optical connector according to Claim 1, wherein the alignment part is wider than the first and second faces.

3. An optical connector comprising:
an optical fiber comprising a glass fiber and a resin coating surrounding the glass fiber;
a ferrule having a through-hole inside the ferrule and a flange outside the ferrule, the flange having a quadrangular cross-section perpendicular to the through-hole, the ferrule holding, in the through-hole, a portion of the glass fiber exposed from the resin coating at an end of the optical fiber; and
a plug frame accommodating the ferrule and having a quadrangular tubular cross-section perpendicular to the through-hole,
wherein the plug frame has first and second faces opposing each other with the through-hole there between and third and fourth faces opposing each other with the through-hole there between and disposed in a direction orthogonal to the first and second faces, and
wherein the flange has two alignment parts capable of supporting the first and second faces, and there are clearances between the flange and the third and fourth faces.

4. The optical connector according to any one of Claims 1 to 3, wherein the alignment parts are a leaf spring structure.

5. The optical connector according to any one of Claims 1 to 4, wherein the optical fiber is a single-mode fiber, a multicore fiber, a polarization-maintaining fiber, or a fiber bundle.

6. The optical connector according to any one of Claims 1 to 5, wherein the ferrule comprises zirconia.

7. An optical connection structure comprising:
the optical connector according to any one of Claims 1 to 6; and
a connection target coupled to the optical connector with a sleeve there between,
wherein the optical fiber is optically connected to another optical fiber.
